# EUROPEAN PATENT APPLICATION

(11) **EP 1 350 980 A2**
(43) Date of publication of application: **08.10.2003**
(21) Application number: 03076003.7
(22) Date of filing: 03.04.2003
(51) Int. Cl.: F16D 63/00

(54) **Drive axle assembly with rheological fluid retarder**

(30) Priority: 03.04.2002 US 115651
(71) Applicant: Meritor Heavy Vehicle Technology, LLC, Troy, Michigan 48084 (US)
(72) Inventor: Sieber, Paul R., Rochester Hills, Michigan 48309 (US); Schneider, Mark M., Royal Oak, Michigan 48073 (US); Bowman, Larry W., Troy, Michigan 48098 (US); Hildebrand, Robert W., Rochester Hills, Michigan 48309 (US); Johnson, Michael E., Rochester, Michigan 48036 (US); Brichta, James R., Highland, Michigan 48356 (US); El-Kassour, Rail S., 42270 St. Priest En-Jarez (FR)
(74) Representative: Wharton, Peter Robert

(57) **Abstract**

A drive axle assembly includes a supplemental brake force assembly that utilizes a variable viscosity fluid (30). The assembly includes a housing defining a cavity (24) and a drive component (26) mounted for rotation relative to the housing. Rotating plates are mounted for rotation with the drive component and a rheological fluid is enclosed within the housing to surround the rotating plates. A current source (44) generates current within the fluid to vary the viscosity. At higher traveling speeds, no current is applied to the fluid so the viscosity of the fluid is low, which reduces drag against the rotating plate. However, when a braking even occurs, current is applied to the fluid to increase viscosity and generate a supplemental braking force. The assembly is preferably incorporated into a wet disc brake with a plurality of non-rotating plates positioned in an alternating dispersal between the rotating plates. A brake actuator (48) compresses the non-rotating and rotating plates together to generate a primary braking force in addition to the supplemental braking force. Fins (112) are formed on the external surface of the housing to dissipate heat generated during braking.

## Description

This application is a continuation-in-part of United States patent application serial number 09/356,431 filed on July 19, 1999.

### BACKGROUND OF THE INVENTION

This invention generally relates to a drive axle that utilizes a variable viscosity fluid to generate supplemental braking forces and more particularly to a wet disc brake system for a drive axle that uses variable viscosity fluid to reduce drag during non-braking events and to achieve desired braking characteristics during braking events.

Braking systems in vehicles are used to reduce the speed of a moving vehicle or to bring the vehicle to a stop. To accomplish these braking events, the braking system generates a braking force to overcome the force of the engine and the inertia of the vehicle. Several types of known braking systems are used on vehicles, including, but not limited to, dry disc brakes and wet disc brakes.

A dry disc brake system for a wheel on a vehicle axle includes a disc connected to and rotating with an axle hub, two brake pads and two pistons. One brake pad sits on each side of the rotating disc. One piston is positioned adjacent to each brake pad and is located on the side of the brake pad opposite the rotating disc. There is a similar system for each wheel on the vehicle.

A brake force is generated by hydraulic fluid forcing the piston to press against the respective brake pad. The brake pad then exerts a frictional force against the rotating disc causing the disc to decrease in rotational speed or stop rotating. One disadvantage of using dry disc brakes is frequent maintenance of the brake components.

Wet disc brake systems essentially have the same configuration as the dry disc brake system, except that there are a plurality of rotating discs interspaced with non-rotating discs that are enclosed within a fluid filled brake housing. Typically, hydraulic fluid is used to fill the brake housing.

Known wet disc brake systems are primarily used in low speed applications. One characteristic of traditional wet disc brakes is that a large drag force is created by the fluid acting on the rotating disc. The vehicle's engine must exert a large force to overcome this drag created by the fluid at higher traveling speeds. This results in an inefficient system at higher traveling speeds. However, wet disc brake systems have advantages over dry disc brake systems because the components in wet disc brakes encounter less wear than the components in dry disc brakes.

Thus, it is desirable to provide a supplemental braking system that can be used in addition to a known primary brake assembly to produce a supplemental braking or retarding force during vehicle braking events to reduce wear on components in the primary brake assemblies. It would be advantageous to incorporate this supplemental system into a wet disc brake system for use in high-speed applications to provide improved braking performance and more efficient engine performance as well as overcoming the other above-mentioned deficiencies in the prior art.

### SUMMARY OF THE INVENTION

The disclosed axle assembly utilizes a retarder with variable viscosity fluid to provide supplemental braking forces for a vehicle. The viscosity of the fluid is varied in response to application of an electrical current, During vehicle braking or slow-down events, current is applied to the fluid to increase the viscosity and generate the supplemental braking force. During normal vehicle operation, i.e. non-braking events, no or low current is applied to the fluid to reduce drag within the assembly. Preferably, the variable viscosity fluid is incorporated into a wet disc brake assembly on the axle. The wet disc brake assembly operates efficiently at low and high speeds due to the use of the variable viscosity fluid because braking forces are generated as needed by increasing viscosity and drag is reduced during high-speed (non-braking) operation by decreasing viscosity.

In the preferred embodiment the axle assembly includes a housing defining a cavity, a drive component supported for rotation relative to the housing, and at least one rotating plate disposed within the cavity for rotation with the drive component. A theological fluid is enclosed within the cavity to at least partially surround the rotating plate. The fluid has a viscosity that varies under application of an electrical current selectively applied by a current source. Absence of electrical current results in a low viscosity to reduce drag against the rotating plate and generation of electrical current increases viscosity to generate a supplemental braking force against the rotating plate to slow rotational speed of the drive component.

As the plate rotates within the increased viscosity fluid, heat is generated, which can lead to fluid break-down or premature component wear. In order to facilitate heat dissipation, fins are formed on an external surface of the housing. Preferably, a plurality of fins is used with one fin being laterally spaced apart from the next fin along the external housing surface. External air flows over the fins to dissipate the heat as the vehicle is driven down the road.

In one embodiment, the rotating plate is directly mounted for rotation with an axle shaft that is operably coupled to drive a wheel. Preferably, a plurality of rotating plates is used with each plate being laterally spaced apart from the next plate along the axle shaft to further increase the supplemental braking force. The rotating plates can be located with a wet disc brake assembly or any other position along the axle shaft.

In another embodiment, the rotating plates are mounted within a wet disc brake housing having a plurality of non-rotating plates positioned between the rotating plates in an alternating configuration. The rotating plates are mounted for rotation with a wheel hub and the non-rotating plates are held fixed relative to the brake housing. A brake actuator compresses the non-rotating and rotating plates together during a braking event to generate a primary braking force. The supplemental and primary braking forces can be generated simultaneously or separately as needed to achieve the desired braking characteristics.

These and other features of the invention may be best understood from the following specification and drawings. The following is a brief description of the drawings.

### BRIEF DESCRIPTION OF THE DRAWINGS

Figure 1 is a schematic illustration of a system designed according to this invention.
Figure 2 is a schematic illustration of an alternative embodiment.
Figure 3 is a flowchart diagram illustrating the preferred method of this invention.
Figure 4 is a flowchart diagram illustrating an alternative method of the invention.
Figure 5 is a schematic illustration of an alternate embodiment of a retarding system incorporating the subject invention.
Figure 6 is a schematic illustration of an alternate embodiment of the subject invention incorporated into a wet disc brake assembly.
Figure 7 is a schematic illustration of an alternate embodiment of the subject invention incorporating heat dissipation fins.
Figure 8 is one embodiment of a rotating disc configuration.
Figure 9 is an alternate embodiment of a rotating disc configuration.

### TAILED DESCRIPTION OF THE PREFERRED EMBODIMENT

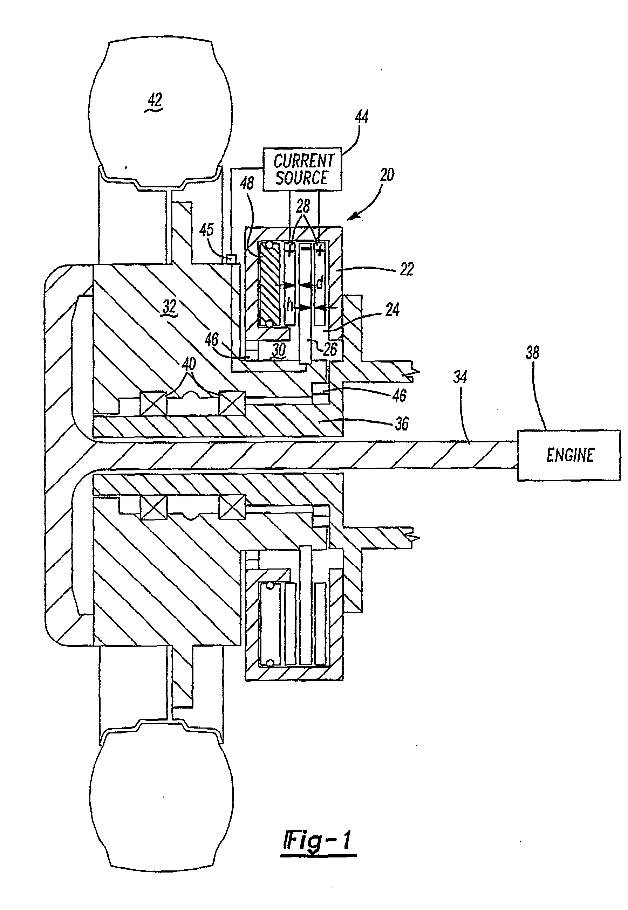

Figure 1 illustrates a reduced drag wet disc brake assembly, shown at 20. The brake assembly 20, preferably includes a brake housing 22 that defines a cavity 24, a rotating plate 26 and two non-rotating plates 28 disposed within the cavity 24, and electrorheological fluid 30 surrounding the plates 26, 28 and filling the cavity 24. The rotating plate 26 is connected to and rotates with a rotating hub 32.

As known, the vehicle's tire 42 is connected to and rotates with the hub 32. The hub 32 is connected to and rotates with an axle shaft 34 via bearings 40. However, no bearings are present if it is a non driving wheel. The axle shaft 34 is positioned within an axle housing 36 and is driven by the vehicle's engine 38. Therefore, the axle shaft 34, the hub 32, the rotating plate 26, and the tire 42 are all connected and when the vehicle is moving all these components rotate simultaneously.

In order to reduce the speed of the moving vehicle, a force is applied to the rotating plate 26 to reduce its angular velocity. A reduction in the rotating plate's 26 angular velocity, has the effect of reducing the angular velocity of the hub 32 and the tire 42, therefore, reducing the speed of the vehicle.

The two non-rotating plates 28 are each connected to the brake housing 22 and positioned within the cavity 24. One non-rotating plate 28 is positioned on each side of the rotating plate 26. Further, the rotating plate 26 and the non-rotating plates 28 are each connected to an electric current source 44. The current source 44 preferably applies a positive charge to the non-rotating plates 28 and a negative charge to the rotating plate 26. Of course the charges could be reversed. Further, a known rotary electric connection 45 is used to transmit the electric current from the current source to the rotating plate.

The brake housing cavity 24 is filled with an electrorheological fluid 30 that surrounds both the rotating and non-rotating plates 26, 28 positioned within the cavity 24. The viscosity of an electrorheological fluid changes as the electric current through the fluid changes. The brake assembly 20 also preferably includes two seals 46, one at either opening of the cavity 24, to contain the electrorheological fluid 30 within the cavity 24.

When the electrorheological fluid 30 does not experience an electric current, the viscosity of the fluid remains low. A fluid with a low viscosity flows readily. On the other hand, when the fluid experiences an electric current, the viscosity of the fluid increases. A fluid with a high viscosity has a high resistance to flow.

When the vehicle is traveling, the engine 38 drives the rotation of the hub 32 and tire 42. Since the rotating plate 26 is exposed to the fluid 30 in the cavity 24, the fluid 30 exerts a drag force on the rotating plate 26 when the plate 26 is rotating. The drag force exerted by the fluid 30 on the rotating plate 26 depends on the fluid's viscosity. The higher the viscosity of the fluid 30, the higher the drag force exerted on the rotating plate 26. A drag force experienced by the rotating plate 26 will decrease the rotating plate's angular velocity.

The use of an electrorheological fluid 30 in the reduced drag wet disc brake assembly 20 is advantageous because the viscosity of the fluid can be controlled. When the vehicle is traveling at higher speeds, the viscosity of the electrorheological fluid 30 can remain low because no current is applied to the plates 26, 28. This translates into a low drag force exerted on the rotating plate 26 at higher speeds. When the vehicle needs to decrease its speed or stop, an electric current is applied to the plates 26, 28, thus increasing the viscosity of the electrorheological fluid 30 in the cavity. The increased viscosity of the fluid 30 creates a larger drag force or braking torque that is applied to the rotating plate 26. Preferably the drag force exerted by the fluid 30 on the rotating plate 26 is great enough to significantly reduce the angular velocity of the rotating plate 26 which, in turn, results in a decrease in the vehicle's speed.

One additional component of the reduced drag wet disc brake assembly 20 is a piston 48 disposed within the brake housing cavity 24 that is positioned adjacent the non-rotating and rotating plates 28, 26. The piston 48 is available to provide a supplemental force on the rotating plate 26 to decrease the plate's angular velocity if needed to decrease the vehicle's speed. Preferably, when pressure is applied to the piston 48, the piston 48 is moved into contact with the non-rotating plate 28 adjacent the piston 48. The non-rotating plate 28 is then moved into contact with the rotating plate 26, thus creating a supplemental braking torque against the rotating plate 26 that causes the angular velocity of the rotating plate 26 to decrease. Since the rotating plate 26 is connected to the hub 32, the angular velocity of hub 32 also decreases, resulting in a decrease in the vehicle's speed.

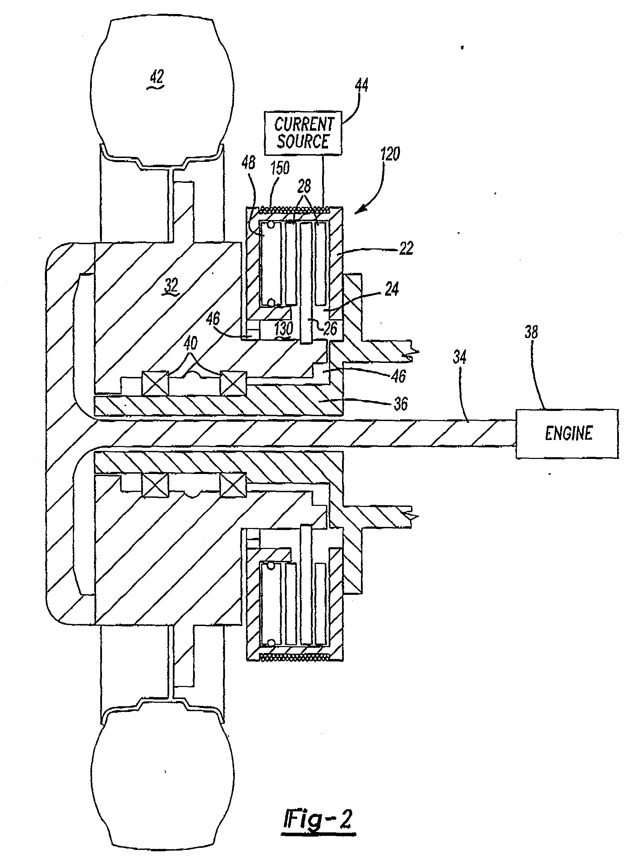

In an alternative embodiment, shown in Figure 2, the fluid in the brake housing cavity 24 of the wet disc brake assembly 120 is a magnetic rheological fluid 130. The viscosity of a magnetic rheological fluid 130 changes when exposed to a magnetic field. An additional component in the alternative embodiment is a coiled wire 150 made of conductive metal. Applying an electric current to the coiled conductive wire 150 creates a magnetic field. The coiled wire 150 is positioned adjacent the brake housing 22.

Similar to the preferred embodiment, when the magnetic rheological fluid 130 does not experience a magnetic field, the viscosity of the fluid 130 remains low. A fluid with a low viscosity has a low resistance to flow, or rather, the fluid flows readily. On the other hand, when the fluid experiences a magnetic field, the viscosity of the fluid increases. A fluid with a high viscosity has a high resistance to flow.

When the vehicle is traveling, the engine 38 drives the rotation of the hub 32 and tire 42. Since the rotating plate 26 is exposed to the fluid 130 in the cavity 24, the fluid 130 exerts a drag force on the rotating plate 26 when the plate 26 is rotating. The drag force exerted by the fluid 130 on the rotating plate 26 depends on the fluid's viscosity. The higher the viscosity of the fluid 130, the higher the drag force exerted on the rotating plate 26. A drag force experienced by the rotating plate 26 will decrease the rotating plate's angular velocity.

The use of a magnetic rheological fluid 130 in the reduced drag wet disc brake assembly 120 is advantageous because the viscosity of the fluid 130 can be controlled. When the vehicle is traveling at higher speeds, the viscosity of the magnetic rheological fluid 130 can remain low because no current is applied to the coiled wire 150. This translates into a low drag force exerted on the rotating plate 26 at higher speeds. When the vehicle needs to decrease its speed or stop, an electric current is applied to the coiled wire 150, thus increasing the viscosity of the magnetic rheological fluid 150 in the cavity. The increased viscosity of the fluid 150 creates a larger drag force or braking torque that is applied to the rotating plate 26. Preferably the drag force exerted by the fluid 150 on the rotating plate 26 is great enough to significantly reduce the angular velocity of the rotating plate 26 which, in turn, results in a decrease in the vehicle's speed.

The alternative embodiment may also include a piston 48 disposed within the brake housing cavity 24 and positioned adjacent the non-rotating and rotating plates 28, 26. The piston 48 is available to provide a supplemental force on the rotating plate 26 to decrease the plate's angular velocity if needed to decrease the vehicle's speed. Preferably, when pressure is applied to the piston 48, the piston 48 is moved into contact with the non-rotating plate 28 adjacent the piston 48. The non-rotating plate 28 is then moved into contact with the rotating plate 26, thus creating a supplemental braking torque against the rotating plate 26 that causes the angular velocity of the rotating plate 26 to decrease. Since the rotating plate 26 is connected to the hub 32, the angular velocity of the hub 32 also decreases, resulting in a decrease in the vehicle's speed.

While magnetic and electric rheological fluids are disclosed, other fluids that have controllable viscosities may also be substituted.

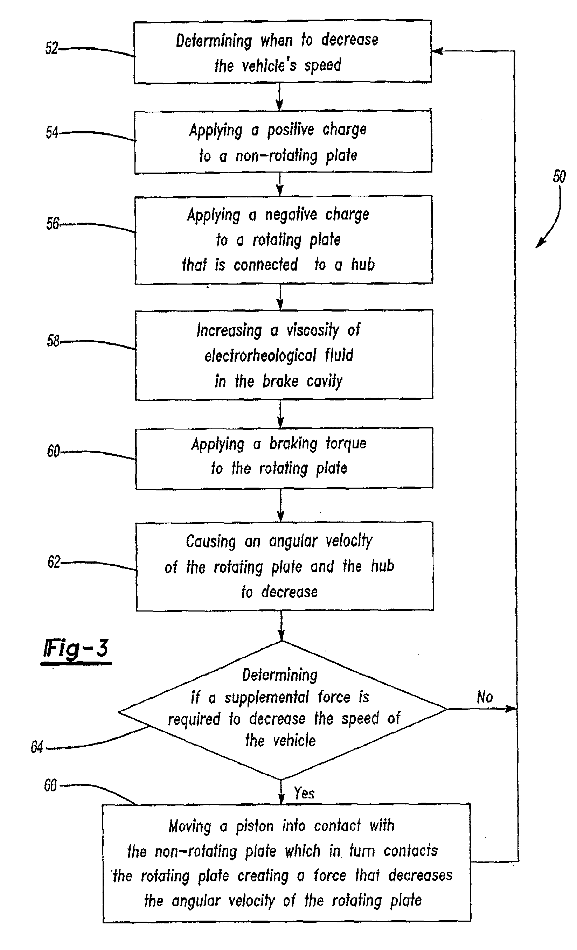

Figure 3 schematically illustrates the preferred method of operating the system 20. The flow chart 50 includes a first step at 52 where a determination is made to decrease the vehicle's speed. If the speed of the vehicle should be reduced, a positive charge is applied to a non-rotating plate 28 at 54 and a negative charge is applied to a rotating plate 26 at 56. At 58 the viscosity of the electrorheological fluid 30 in the brake cavity 24 increases due to the electric current experienced by the electrorheological fluid 30. The increased viscosity causes an increased drag force on the rotating plate 26. A braking torque, as a result of the increased drag, is applied to the rotating plate 26 at 60. At 62 the angular velocity of the rotating plate 26 and the hub 32 decrease due to the applied braking torque. A determination is made at 64 whether a supplemental force is required to decrease the speed of the vehicle. If a supplemental force is required, at 66 a piston 48 is moved into contact with the non-rotating plate 28 which in turn contacts the rotating plate 26 creating a force that decreases the angular velocity of the rotating plate 26. As can be appreciated from the flow chart 50, the system preferably continuously monitors the vehicle's speed.

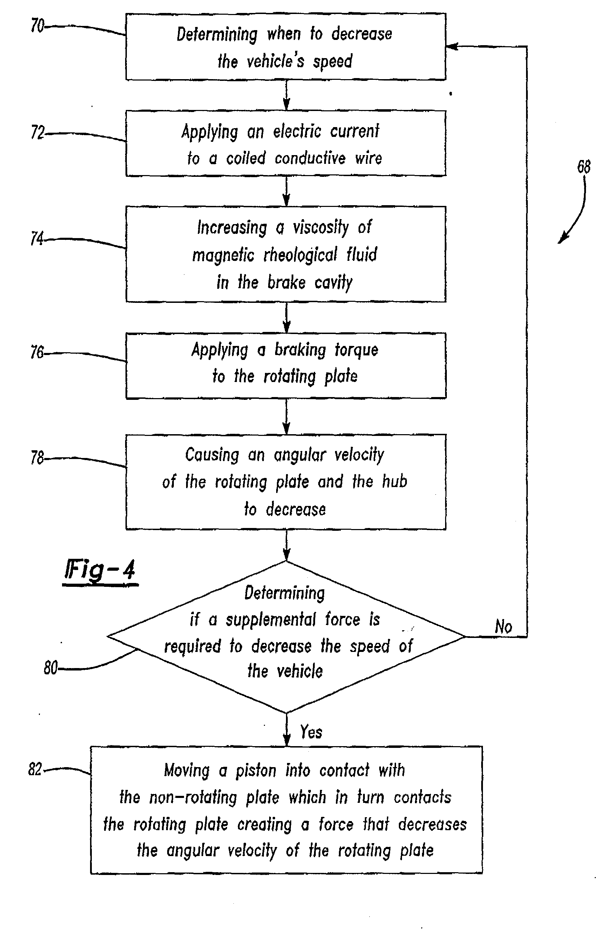

Figure 4 schematically illustrates an alternative method of operating the system 20. The flow chart 68 includes a first step at 70 where a determination is made to decrease the vehicle's speed. If the speed of the vehicle should be reduced, an electric current is applied to a coiled conductive wire 150 at 72 creating a magnetic field. At 74 the viscosity of the magnetic rheological fluid 130 in the brake cavity 24 increases due to the magnetic field experienced by the magnetic rheological fluid 130. The increased viscosity causes an increased drag force on the rotating plate 26. A braking torque as a result of the increased drag is applied to the rotating plate 26 at 76. At 78 the angular velocity of the rotating plate 26 and the hub 32 decrease due to the applied braking torque. A determination is made at 80 whether a supplemental force is required to decrease the speed of the vehicle. If a supplemental force is required, at 82 a piston 48 is moved into contact with the non-rotating 28 plate which in turn contacts the rotating plate 26 creating a force that decreases the angular velocity of the rotating plate 26. As can be appreciated from the flow chart 68, the system preferably continuously monitors the vehicle's speed.

Thus, the subject invention is a retarding mechanism that utilizes variable viscosity fluid to provide supplemental braking forces for a vehicle during braking events and to reduce drag during non-braking vehicle operation. The viscosity of the fluid is varied in response to application of an electrical current. During vehicle braking or slow-down events, current is applied to the fluid to increase the viscosity and generate the supplemental braking force. During normal vehicle operation, i.e. non-braking events, no or low current is applied to the fluid to reduce drag within the assembly. Preferably, the variable viscosity fluid is incorporated into a wet disc brake assembly 20 mounted to each end of the axle housing 36 as discussed above and as shown in Figures 1 and 2. The wet disc brake assembly 20 operates efficiently at low and high speeds due to the use of the variable viscosity fluid because braking forces are generated as needed by increasing viscosity and drag is reduced during high-speed (non-braking) operation by decreasing viscosity.

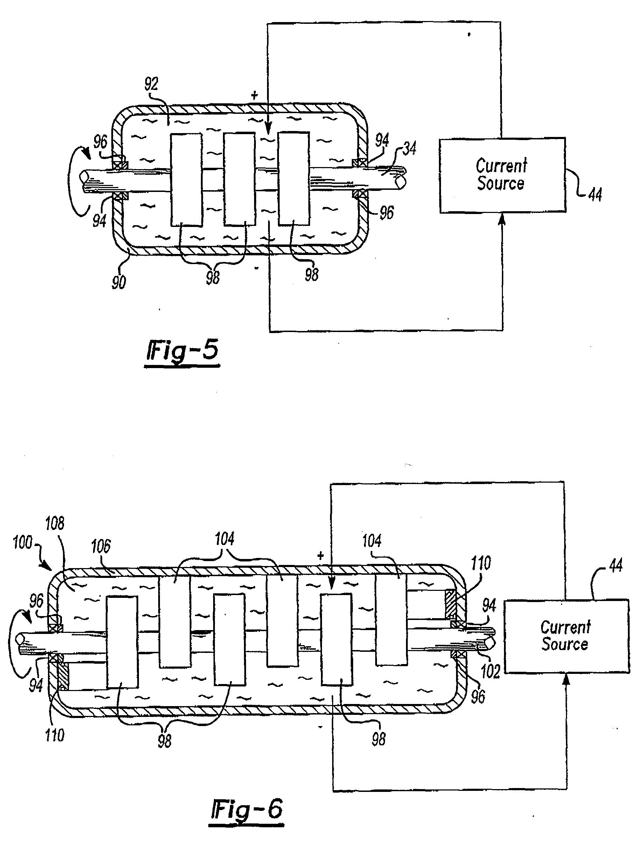

The subject invention could also be separately incorporated into the axle as shown in Figure 5. A fluid housing 90 held fixed to the axle housing 36 or some other non-rotating axle component and defines a cavity 92 that is filled with variable viscosity fluid. A drive component, such as an axle shaft 34 is mounted within the axle housing 36 for rotation relative to the fluid housing 90. Bearings 94 and seals 96 are installed, as known in the art, to provide a sealed environment within the cavity 92.

A plurality of rotating plates 98 is mounted for rotation with the axle shaft 34. It should be understood that a single rotating plate 98 could also be used in a configuration similar to that of Figures 1 and 2, however, a plurality of rotating plates 98 is preferred with one rotating plate 98 laterally spaced from the next rotating plate 98 along the axle shaft 34. The variable viscosity fluid is enclosed within the cavity 92 to at least partially surround the rotating plates 98. As discussed above, the viscosity varies under application of an electrical current that is selectively applied by the current source 44. Absence of electrical current results in a low viscosity to reduce drag against the rotating plates 98 and generation of electrical current increases viscosity to generate a supplemental braking force against the rotating plate 98 to slow rotational speed of the axle shaft.

In an alternate embodiment, shown in Figure 6, the subject invention is incorporated into a wet disc brake assembly 100 similar to that shown in Figures 1 and 2. In this configuration, the rotating plates 98 are mounted for rotation with a drive component 102, such as an axle shaft 34 or wheel hub 32 (see Figs. 1 and 2). A plurality of non-rotating plates 104 are positioned between the rotating plates 98 in an alternating configuration as is known in the art. Preferably, the non-rotating plates 104 are fixed relative to a brake housing 106 as described above. Both the non-rotating 104 and rotating 98 plates are disposed within a cavity 108 that is formed within the housing 106. Bearings 94 and seals 96 are incorporated into the assembly 100 as known in the art, to provide a sealed environment within the cavity 108. The current source 44 varies the viscosity as described above to generate the supplemental braking forces.

Additionally, the wet disc brake assembly 100 includes a brake actuator 110 that compresses the non-rotating 104 and rotating 98 plates together to generate a primary braking force. The actuator 110 can be any type of known brake actuating mechanism, such as the piston 48 shown in Figures 1 and 2. The actuator 110 can be positioned on either side of the plates 98, 104, as shown in Figure 6, or multiple actuators 110 can be used. The supplemental and primary braking forces can be generated simultaneously or separately as needed to achieve the desired braking characteristics.

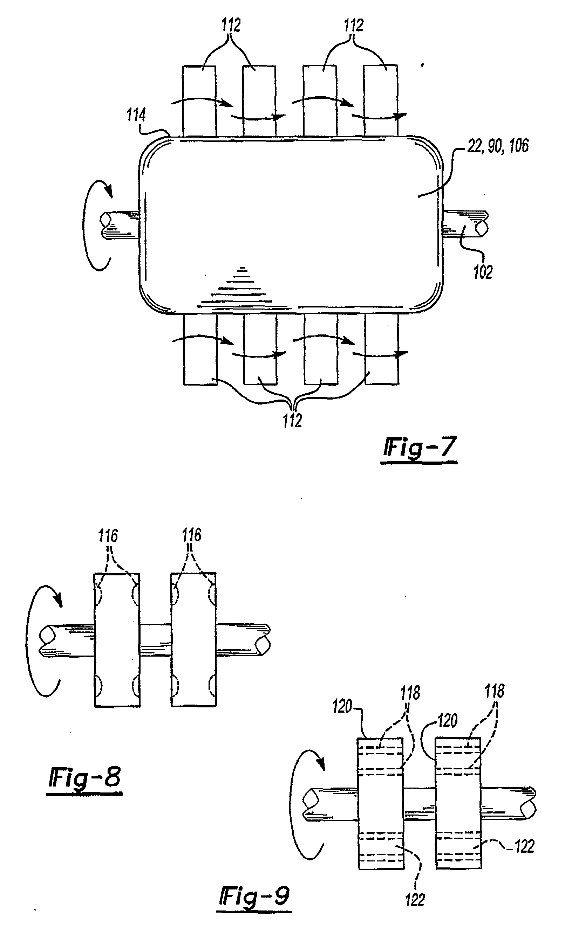

As the plates 98 rotate within the increased viscosity fluid, heat is generated, which can lead to fluid break down or pre-mature component wear. In order to facilitate heat dissipation, fins 112 are formed on an external surface 114 of the housing 22, 90, 106 (see Fig. 7). Preferably, a plurality of fins 112 is used with one fin 112 being laterally spaced apart from the next fin 112 along the external housing surface 114. External air flows over the fins 112 to dissipate the heat generated by the rotating plates 26, 98 as the vehicle is driven down the road. The fins 112, can be of varying thickness and varying height relative to the external surface 114 to provide the necessary heat dissipation properties. The fins 112 can be separate components attached to the housing 22, 90, 106 or can be integrally formed with the housing 22, 90, 106 as one piece. It should be understood that the fins 112 could be utilized with any of the embodiments shown in Figures 1, 2, 5, and 6.

Under applied current, the high viscosity results in high resistance to the rotating discs 26, 98 as the rotating discs 26, 98 try to shear the fluid. The discs 26, 98 can include pockets or depressions 116, as shown in Figure 8, or can include perforations 118, as shown in Figure 9, to increase the shear force, i.e. provide higher supplemental braking forces. The depressions 116 can be formed in a predetermined patter to provide maximum shear forces. The perforations 118 can be formed as slots, circular bores, or other similar configurations that extend from one plate surface 120 to an opposite plate surface 122.

The invention has been described in an illustrative manner, and it is to be understood that the terminology that has been used is intended to be in the nature of words of description rather than of limitation. Modifications and variations of the examples described above are possible and it must be understood that such changes may be within the scope of the following claims. In other words, the invention may be practiced otherwise than as specifically described above.

## Claims

1. An axle assembly comprising:
a housing defining a cavity,
a drive component supported for rotation relative to said housing to drive a pair of laterally spaced wheels;
at least one rotating plate disposed within said cavity and mounted for rotation with said drive component;
a fluid enclosed within said cavity to at least partially surround said rotating plate, said fluid having a viscosity that varies under application of an electrical current; and
a current source for selectively applying an electrical current to vary said viscosity of said fluid wherein absence of electrical current results in a low viscosity to reduce drag against said rotating plate and generation of said electrical current increases said viscosity to generate a supplemental braking force against said rotating plate to slow rotational speed of said drive component

2. The axle assembly of claim 1 wherein said drive component is an axle shaft driven by a vehicle engine and said at least one rotating plate is directly mounted for rotation with said axle shaft.

3. The axle assembly of claim 1 wherein said at least one rotating plate is a plurality of rotating plates spaced laterally apart from one another along said drive component.

4. The axle assembly of claim 3 wherein said rotating plates each include a pair of opposite facing surfaces having a plurality of depressions formed within said surfaces for increasing shear forces acting against said rotating plate.

5. The axle assembly of claim 3 wherein said rotating plates each include a plurality of perforations formed within said plates in a predetermined pattern to increase shear forces acting against said rotating plate.

6. The axle assembly of claim 3 wherein said rotating plates generate heat as said viscosity increases and wherein said housing includes at least one fin extending radially outward from an external surface of said housing to dissipate said heat as external air flows over said fin.

7. The axle assembly of claim 6 wherein said at least one fin is a plurality of fins laterally spaced apart from one another along said external surface of said housing.

8. The axle assembly of claim 1 including a wet disc brake assembly with said housing being a wet disc brake housing and including at least one non-rotating plate mounted to said wet disc brake housing and positioned adjacent to said rotating plate.

9. The axle assembly of claim 8 including a brake actuator for compressing said non-rotating and rotating plates together to generate a primary braking force in additional to said supplemental braking force.

10. The axle assembly of claim 9 wherein said fluid is a rheological fluid and said current source applies a charge to said non-rotating plate and said current source applies an opposed charge to said rotating plate to generate an electrical current within said rheological fluid to vary said viscosity.

11. The axle assembly of claim 10 wherein said at least one non-rotating plate comprises a pair of non-rotating plates with one rotating plate disposed between said pair of non-rotating plates.

12. The axle assembly of claim 10 wherein said at least one rotating plate comprises a plurality of rotating plates laterally spaced apart from one another along said drive component and said at least one non-rotating plate comprises a plurality of non-rotating plates mounted to said wet disc brake housing and interspaced between said rotating plates in an alternating configuration.

13. The axle assembly of claim 12 wherein said drive component is a wheel hub coupled for rotation with an axle shaft.

14. A wet disc brake assembly comprising:
a housing defining a cavity,
a drive component supported for rotation relative to said housing to drive a wheel;
at least one rotating plate disposed within said cavity and mounted for rotation with said drive component;
at least one non-rotating plate disposed within said cavity and fixed relative to housing;
a fluid enclosed within said cavity to at least partially surround said rotating plate, said fluid having a viscosity that varies under application of an electrical current; and
a current source for selectively applying an electrical current to vary said viscosity of said fluid wherein absence of electrical current results in a low viscosity to reduce drag against said rotating plate and generation of said electrical current increases said viscosity to generate a supplemental braking force against said rotating plate to slow rotational speed of said drive component.

15. The wet disc brake assembly of claim 15 wherein said wherein said fluid is a rheological fluid and said current source applies a positive charge to one of said non-rotating and rotating plates and said current source applies a negative charge to the other of said non-rotating and rotating plates to generate an electrical current within said rheological fluid to vary said viscosity.

16. The wet disc brake assembly of claim 15 including a brake actuator for compressing said non-rotating and rotating plates together to generate a primary braking force in additional to said supplemental braking force.

17. The wet disc brake assembly of claim 16 wherein said at least one rotating plate comprises a plurality of rotating plates laterally spaced apart from one another along said drive component and said at least one non-rotating plate comprises a plurality of non-rotating plates mounted to said wet disc brake housing and interspaced between said rotating plates in an alternating configuration.

18. The wet disc brake assembly of claim 17 including at least one fin extending out radially from an external surface of said housing and disposed within an external air flow path such that heat generated as said rotating plates rotate within high viscosity fluid is dissipated as air flows over said fin.

19. The wet disc brake assembly of claim 18 wherein said drive component is an axle shaft with said rotating plates being directly mounted to said shaft for rotation therewith.

20. The wet disc brake assembly of claim 18 wherein said drive component is a wheel hub with said rotating plates being directly mounted to said shaft for rotation therewith.

21. A method for generating a braking force for a vehicle wheel end having a housing with a cavity including at least one rotating plate disposed within the cavity adjacent to at least one non-rotating plate and including a rheological fluid enclosed within the cavity to at least partially surround the rotating plate and comprising the steps of:
(a) determining when a decrease in vehicle speed is required;
(b) applying an electrical current to the fluid; and
(c) generating a supplemental braking force as the viscosity of the fluid increases to decrease rotational speed of the rotating plate.

22. The method of claim 21 including the step of (d) compressing the non-rotating and rotating plates together to generate a primary braking force subsequent to step (a).

23. The method of claim 22 wherein steps (d) and (c) occur simultaneously.

24. The method of claim 23 including the step of (e) dissipating heat generated during step (c) by flowing air over fins extending out from an external surface of the housing.

25. The method of claim 21 including the step of(d) reducing drag on the rotating plate by prohibiting application of electrical current to the fluid during non-braking vehicle events.
